(19) Europäisches Patentamt
European Patent Office
Office européen des brevets

(11) Veröffentlichungsnummer: **0 379 905 A1**

(12) **EUROPÄISCHE PATENTANMELDUNG**

(21) Anmeldenummer: **90100559.5**

(22) Anmeldetag: **12.01.90**

(51) Int. Cl.5: **C09B 62/016, C09B 47/00**

(30) Priorität: **25.01.89 DE 3902053**

(43) Veröffentlichungstag der Anmeldung:
**01.08.90 Patentblatt 90/31**

(84) Benannte Vertragsstaaten:
**CH DE FR GB LI**

(71) Anmelder: **BAYER AG**
**D-5090 Leverkusen 1 Bayerwerk(DE)**

(72) Erfinder: **Jäger, Horst, Dr.**
**Carl-Rumpff-Strasse 37**
**D-5090 Leverkusen 1(DE)**
Erfinder: **Kaletta, Bernd, Dr.**
**Heymannstrasse 40**
**D-5090 Leverkusen 1(DE)**

(54) **Reaktivfarbstoffe.**

(57) Reaktivfarbstoffe, die in Form der freien Säure der Formel (1) entsprechen

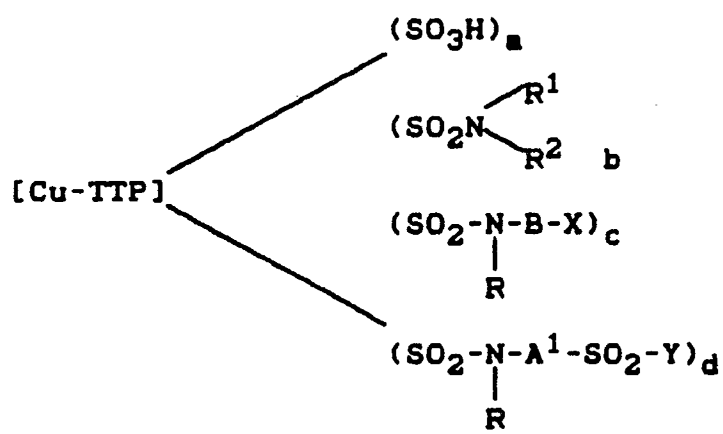

(1)

worin
[Cu-TTP] = Rest des Kupfer-Tetrabenzo-triazaporphins der Formel

EP 0 379 905 A1

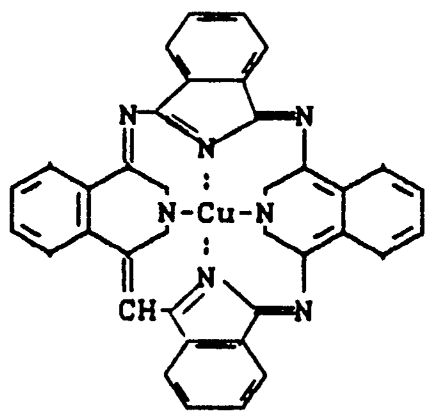

und die restlichen Substituenten die in der Beschreibung angegebene Bedeutung haben, eignen sich zum Färben von hydroxyl- und amidgruppenhaltigen Materialien und liefern klare Färbungen mit guten Licht- und Naßechtheiten.

## Reaktivfarbstoffe

Die vorliegende Erfindung betrifft Reaktivfarbstoffe, die in Form der freien Säure der Formel (1) entsprechen

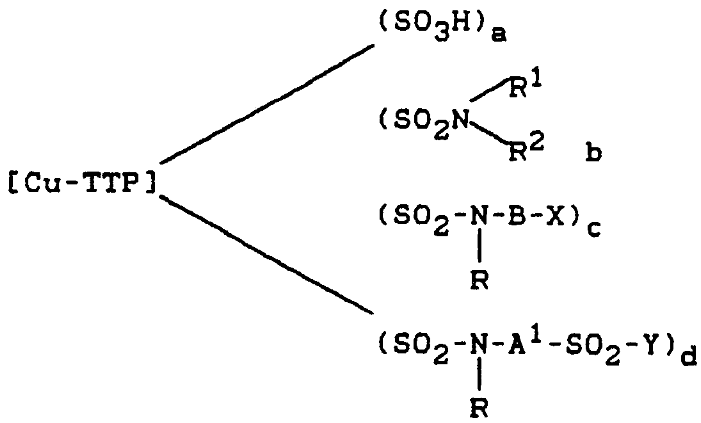
(1)

worin
[Cu-TTP] = Rest des Kupfer-Tetrabenzo-triazaporphins abgekürzt TTP) der Formel

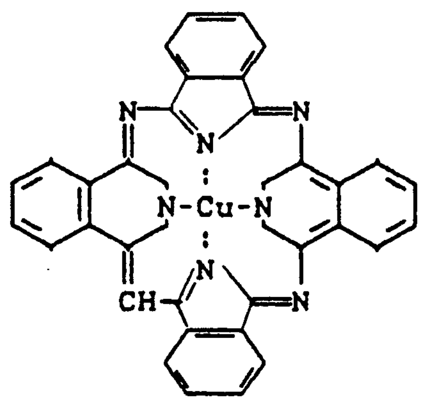

$R^1$ und $R^2$ gleich oder verschieden sein können und für Wasserstoff oder ggf. substituiertes $C_1$-$C_6$-Alkyl stehen können oder worin $R^1$ und $R^2$ zusammen mit dem durch sie eingeschlossenen Stickstoffatom einen ggf. weitere Heteroatome enthaltenden heterocyclischen Rest bilden,
B = direkte Bindung oder 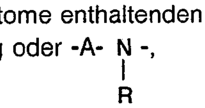
wobei
A = zweiwertiger aliphatischer, araliphatischer oder aromatischer Rest,
R = Wasserstoff, ggf. substituiertes $C_1$-$C_6$-Alkyl, wobei die Gruppierung
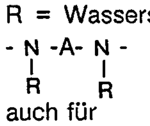
auch für

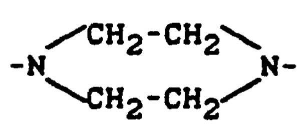 stehen kann,

$A^1$ = zweiwertiger aliphatischer, araliphatischer oder aromatischer Rest,
X = Reaktivgruppe,

Y = $-CH=CH_2$ oder $-CH_2-CH_2-Z$, wobei Z eine abspaltbare Gruppe bedeutet,
a = 0 bis 3,
b = 0 bis 1,
c = 0 bis 3,
d = 0 bis 3,
wobei a + b + c + d = 3 bis 4
und c + d = 1 bis 3.

Gegebenenfalls substituiertes $C_1$-$C_6$-Alkyl, R, $R^1$ und $R^2$ steht vorzugsweise für ggf. durch $OCH_3$, OH, COOH, $SO_3H$ oder Phenyl substituiertes $C_1$-$C_4$-Alkyl, z.B. Methyl, Ethyl, Propyl, Butyl, ß-Hydroxyethyl, ß-Sulfatoethyl, ß-Methoxyethyl.

Beispiele für Y sind: $-CH_2CH_2OSO_3H$, $-CH_2CH_2Cl$, $-CH_2CH_2S_2O_3H$, $-CH_2CH_2OPO_3H_2$,

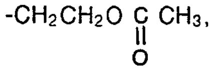

Bilden $R^1$ und $R^2$ zusammen mit dem durch sie eingeschlossenen Stickstoffatom einen ggf. weitere Heteroatome enthaltenden heterocyclischen Rest, so kommen vorzugsweise folgende Gruppierungen in Betracht:

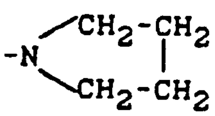 , 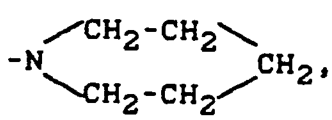 , 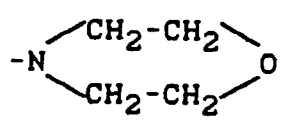

Beispiele für die Reste A und $A^1$ sind folgende:

a) aliphatisch

$-CH_2-CH_2-$, $-CH_2CH_2-CH_2-$, $-(CH_2)_6-$, $-CH_2CH_2OCH_2CH_2-$,

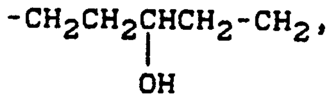 , $-SO_2-(-CH_2)_4-$, 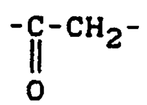 , 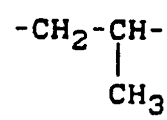

$-CH_2-CH_2NH-CH_2-CH_2$, 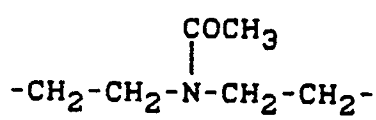

b) araliphatisch

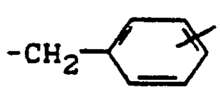 , 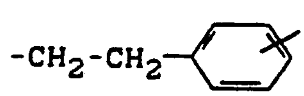 , 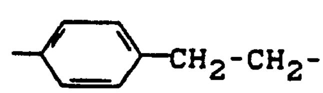

c) aromatisch

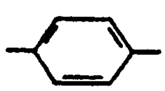 , 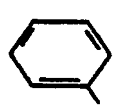 , 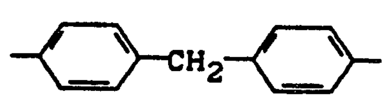 ,

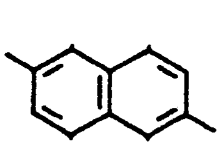 , 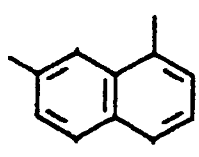 , 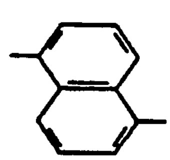

Die Phenylen- oder Naphthylenringe können selbstverständlich Substituenten enthalten, beispielsweise $C_1$-$C_4$-Alkyl wie $CH_3$, $C_2H_5$, $C_1$-$C_4$-Alkoxy wie $OCH_3$, $OC_2H_5$, Halogen wie Cl oder Br, Carboxy und Sulfo.

In den Farbstoffen der Formel (1) ist jede Sulfonsäure-, bzw. jede Sulfonamidgruppe, an einen anderen Benzolring des Cu-TTP in 3- oder 4-Stellung gebunden.

Im Rahmen der Formel (1) sind Farbstoffe (1a) bevorzugt, in denen
a = 0 bis 3,
b = 0 bis 1,
c = 1 bis 3 und
d = 0, wobei a + b + c = 3 bis 4,
weiterhin solche (1b), in denen
a = 0 bis 3,
b = 0 bis 1,
c = 0,
d = 1 bis 3, wobei a + b + d = 3 bis 4,
weiterhin solche (1c), in denen
B = $-A-\underset{R}{\underset{|}{N}}-$,
a = 0 bis 2,
b = 0 bis 1,
c = 0,2 bis 2,
d = 0,2 bis 2, wobei a + b + c + d 3 bis 4
und c + d = 1 bis 3, insbesondere 1,5 bis 2,5. Weiterhin sind Farbstoffe der Formel (1), (1a), (1b) und (1c) bevorzugt, in denen R, $R^1$ und $R^2$ = Wasserstoff.

Bevorzugte Farbstoffe im Rahmen der Formel (1a) sind solche, in denen B = $-A-\underset{R}{\underset{|}{N}}-$, wobei besonders bevorzugt diejenigen sind, worin A für

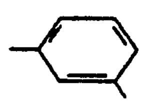 oder 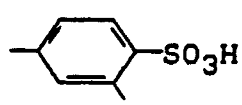

und X für eine Reaktivgruppe der Monofluortriazin, -Monochlortriazin- oder Fluorpyrimidinreihe steht.

Für B = direkte Bindung steht X im Rahmen der Formel (1a) bevorzugt für eine über $SO_2$ gebundene Reaktivgruppe beispielsweise 2,4-Dichlorpyrimidin-5-sulfonyl, 2,3-Dichlorchinoxalin-6-sulfonyl, 1,4-Dichlorphthalazin-6-sulfonyl, 2-Chlorbenzthiazol-5- oder -6-sufonyl, 2-Methylsulfonylbenzthiazol-5- oder -6-sulfonyl.

Bevorzugte Farbstoffe der Formel (1b) sind solche, in denen

$A^1$ = 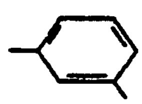 oder 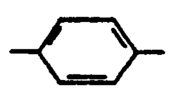 und

Y = $-CH_2CH_2OSO_3H$ oder $-CH=CH_2$

Gegenstand der Erfindung sind weiterhin Verfahren zur Herstellung der Farbstoffe (1a), (1b) und (1c).

So lassen sich beispielsweise Cu-TTP Farbstoffe der Formel (1a) mit B = $-A-\underset{R}{\underset{|}{N}}-$ dadurch herstellen, daß man ein TTP-Sulfochlorid der Formel

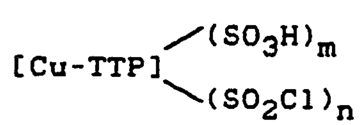 (2)

worin Cu-TTP die angegebene Bedeutung hat, m eine Zahl von 0 bis 3 und n eine Zahl von 1 bis 4 darstellt und die Summe aus m und n höchstens 4 beträgt mit einem Amin der Formel

H- N -A- N -X (3)
R R

und ggf. in Anwesenheit eines weiteren Amins der Formel

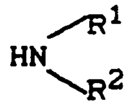

(4)

umsetzt.

Ein weiteres Verfahren zur Herstellung von Farbstoffen der Formel (1a) mit B = -A- N -
R
besteht darin, daß man ein Cu-TTP-Sulfochlorid der Formel (2) mit einem Amin der Formel

H- N -A- N -H (5)
R R

selektiv so umsetzt, daß nur eine Aminogruppe von (5) mit einer Sulfochloridgruppe reagiert, und ggf. in Gegenwart eines weiteren Amins (4) zu einer Cu-TTP-Verbindung der Formel

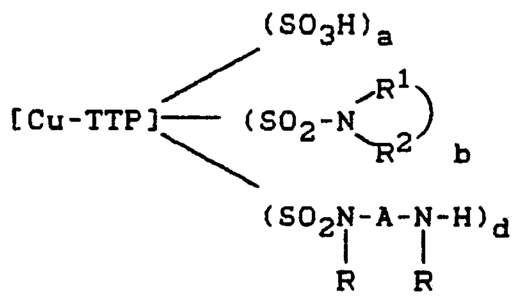

(6a)

wobei a, b und d die für Farbstoffe der Formel (1a) genannte Bedeutung haben, kondensiert und diese dann durch Acylierung mit einer Reaktivkomponente der Formel

X-U (7)

worin U eine anionisch abspaltbare Gruppe, insbesondere F oder Cl bedeutet, und X die angegebene Bedeutung hat, zu Farbstoffen der Formel (1a) acyliert.

Cu-TTP-Verbindungen der Formel (1a), in denen B = -A- N -,
R
lassen sich weiterhin dadurch herstellen,
daß man ein Cu-TTP-Sulfochlorid der Formel (2) mit einem Amin der Formel

H- N -A-Z (5a)
R

worin Z für eine Nitrogruppe oder eine Acylaminogruppe, insbesondere eine Oxalyl- oder Acetylaminogruppe steht, und ggf. in Anwesenheit eines weiteren Amins der Formel (4) zu einer Cu-TTP-Verbindung der Formel

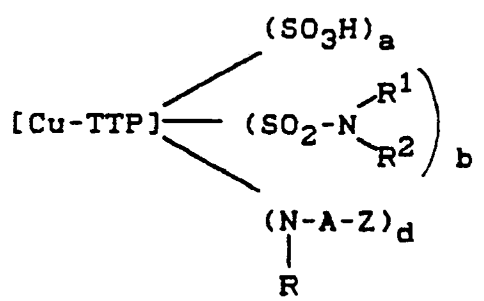

(6a)

wobei a, b + d die für Farbstoffe der Formel (1a) genannte Bedeutung haben, umsetzt und dann anschließend durch Reduktion der Nitrogruppe beispielsweise mit Natriumsulfid oder durch Verseifen der Acylaminogruppe durch Erhitzen mit verdünnten Säuren oder Laugen eine Cu-TTP-Verbindung der Formel

(6a) herstellt, die dann durch Acylierung und einer Reaktivkomponente (7) zu einem Farbstoff der Formel (1a) kondensiert wird.

Farbstoffe der Formel (1b) lassen sich beispielsweise dadurch herstellen, daß man ein Cu-TTP-Sulfochlorid (2) mit einem Amin der Formel

H- N -$A^1$-$SO_2$Y (8)
   |
   R

und ggf. in Gegenwart eines weiteren Amins der Formel (4) kondensiert.

Farbstoffe der Formel (1c) werden beispielsweise dadurch hergestellt, daß man ein Cu-TTP-Sulfochlorid der Formel (2) mit einem Amin der Formel

H- N -A- N -X (3),
   |     |
   R     R

einem Amin der Formel (8) und ggf. in Anwesenheit eines weiteren Amins der Formel (4) umsetzt.

Bei den erwähnten Verfahrensvarianten werden die Amine (3), (5), (5a) und (8) gegenüber dem Cu-TPP-Sulfochlorid der Formel (2) in einem molaren Überschuß von 0 bis 70 % über die durch den jeweiligen Zahlenwert des Index c und d (vgl. Formel (1), (1a), (1b) und (1c)) vorgegebene molare Menge hinaus eingesetzt.

Die Umsetzung von Verbindungen der Formel (2) mit den Aminen (3), (5), (5a), (8) und ggf. (4) wird vorzugsweise im wäßrigen oder im wäßrig-organischen Medium im pH-Bereich von 3 bis 8 und bei Temperaturen zwischen 0 und 60 °C durchgeführt, wobei man zweckmäßigerweise die freiwerdende Säure durch Zusatz von Alkali, wie z.B. Natriumbicarbonat, Soda, Natronlauge, Natriumacetat, Lithiumcarbonat, Lithiumhydroxid oder Kaliumcarbonat neutralisiert bzw. abpuffert oder ggf. die freiwerdende Säure durch einen Überschuß an Amin (4) bindet. Als organische Lösungsmittel kommen Ethanol, Chlorbenzol, Dichlorbenzol, Dimethylformamid und ähnliche infrage. Man kann die Kondensation auch in Gegenwart eines Reaktionsbeschleunigers wie Pyridin, Pyridincarbonsäure oder Pyridinsulfonsäure, Pyridincarbonsäureamid oder Pyridinsulfonsäureamid ausführen. Insbesondere verwendet man einen solchen Reaktionsbeschleuniger bei der Herstellung von Farbstoffen der Formel (1b). Beispiele für solche Reaktionsbeschleuniger sind aus der Deutschen Patentschrift 2906442 und der Europäischen Patentanmeldung 231837 bekannt.

Die Amine (3), (5), (5a) und (8) und ggf. (4) können bei den einzelnen Verfahrensvarianten gleichzeitig oder nacheinander in beliebiger Reihenfolge mit den Sulfochloriden (2) umgesetzt werden. Enthält das Cu-TPP-Sulfochlorid (2) weniger Sulfonsäuregruppen als sie für die Verbindungen (1) erwünscht sind, so werden diejenigen Sulfochloridgruppen, die mit den Aminen (3), (5), (5a), (8) und ggf. (4) nicht reagiert haben, zu Sulfonsäuregruppen hydrolysiert.

Farbstoffe der allgemeinen Formel (1) fallen bei der Synthese gewöhnlich in Form von Gemischen der Einzel farbstoffe an, die sich voneinander durch den Substitutionsgrad a, b, c und d unterscheiden, weshalb bei der Aufstellung der die erfindungsgemäßen Farbstoffe abdeckenden Formeln gebrochene Werte der Indices a, b, c und d angegeben werden. Diese gebrochenen Zahlen stellen Durchschnittswerte dar, die experimentell und analytisch ermittelt werden können.

Die Cu-TTP-Sulfochloride der Formel (2) können prinzipiell nach den aus der Phthalocyanin-Chemie bekannten Verfahren hergestellt werden beispielsweise in der Weise, daß man das Cu-Tetrabenzotriazaporphin bzw. die entsprechende Cu-Tetrabenzotriazaporphinsulfansäure mit Chlorsulfonsäure, ggf. in Gegenwart von Tetrachlorkohlenstoff oder eines Säurehalogenids wie Thionylchlorid, Sulfonylchlorid, Phosphorpentachlorid, Phosphoroxichlorid bzw. Phosphortrichlorid umsetzt.

Bevorzugt werden die Sulfochloride (2) durch Erhitzen des Cu-Tetrabenzotriazaporphins mit Chlorsulfonsäure erhalten, wobei man die Anzahl m und n der eintretenden Sulfochlorid- und Sulfogruppen in Verbindungen der Formel (2) durch die geeignete Wahl von Temperatur und Reaktionszeit steuern kann. Durch Nachbehandeln mit Thionylchlorid kann man das Verhältnis der Indices m und n beeinflussen.

Das als Ausgangsmaterial eingesetzte Kupfertetrabenzotriazaporphin ist aus der Literatur bekannt (US-Patent 2166240), gleichfalls die Cu-Tetrabenzotriazaporphinsulfonsäure (J. Chem. Soc. 1938, 1; US-Patent 2166240).

Beispiele für Amine der Formel (3) sind folgende:

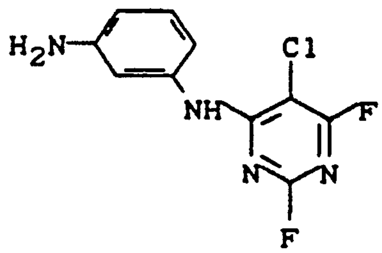

"

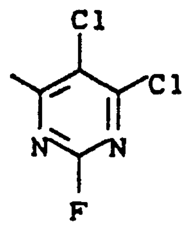

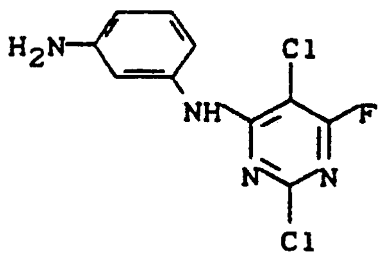

"

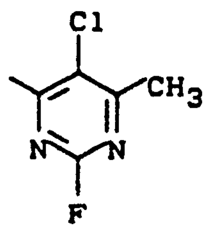

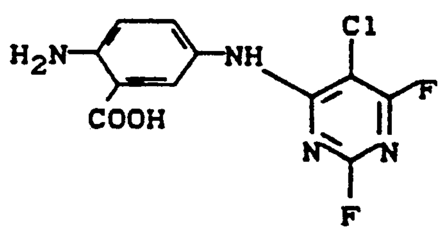

"

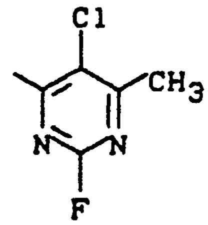

"

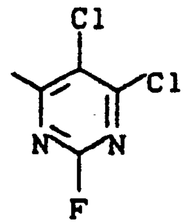

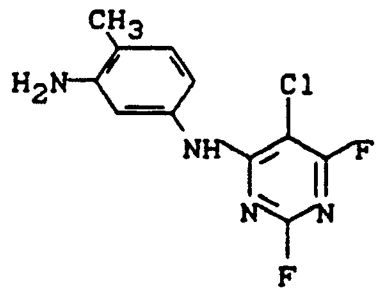

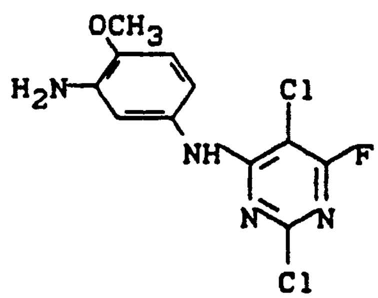

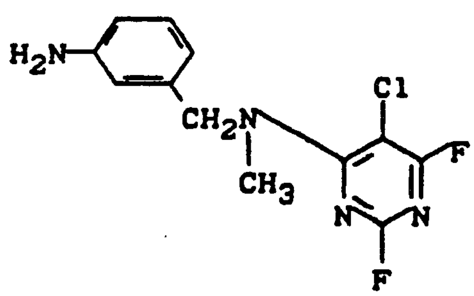

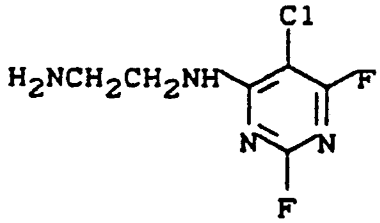

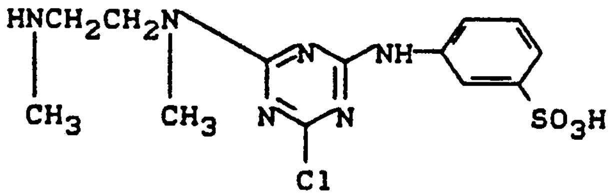

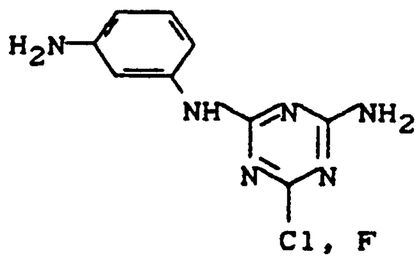
,
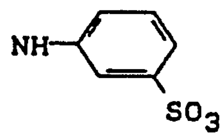
,
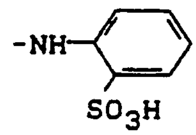

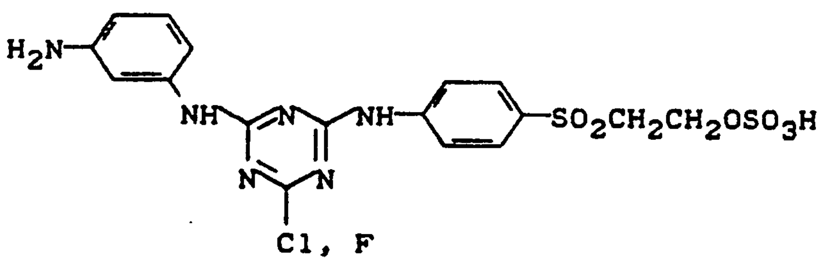

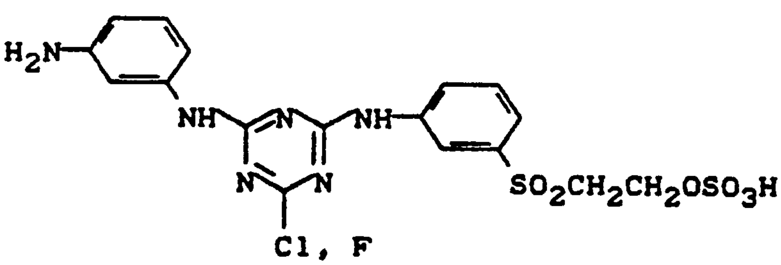

Beispiele für Amine der Formel (5) sind folgende:

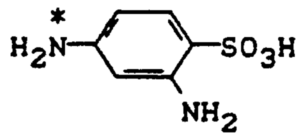

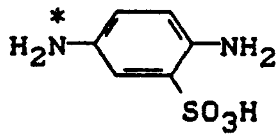

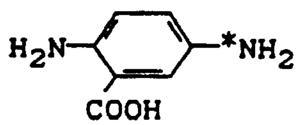

$H_2NCH_2CH_2NH_2$

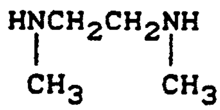

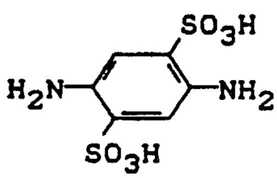

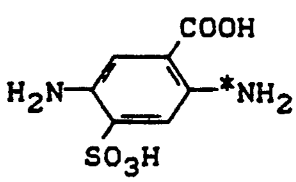

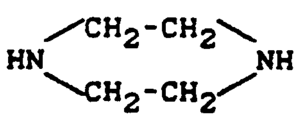,

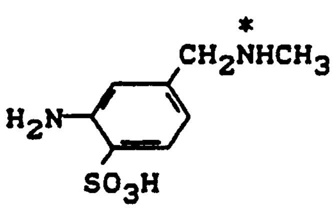

**Die Acylierung findet vorzugsweise an der mit einem Stern * gekennzeichneten Aminogruppe statt.**

Beispiele für Amine der Formel (5 a) sind folgende:

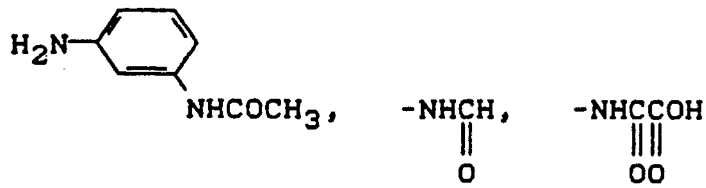

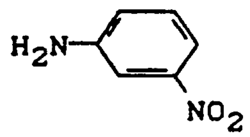

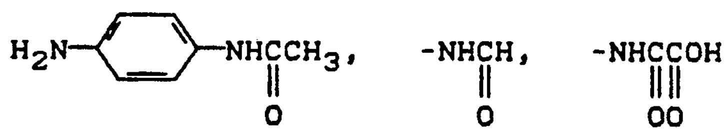

$H_2NCH_2CH_2NHCOCH_3$

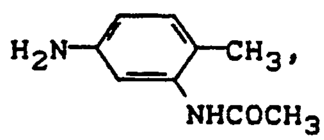

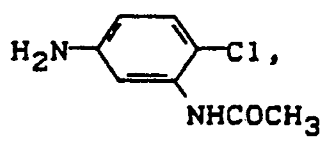

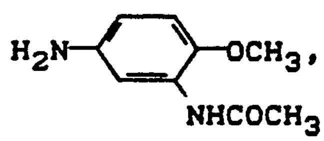

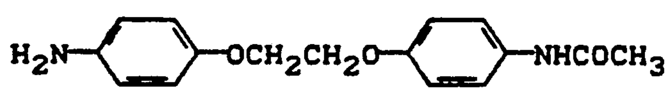

Beispiele für Amine (8) sind folgende:

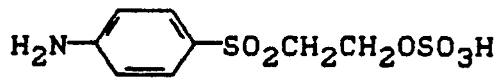

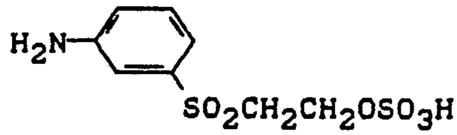

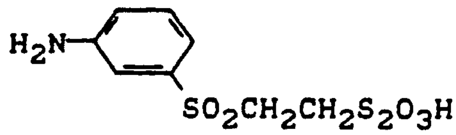

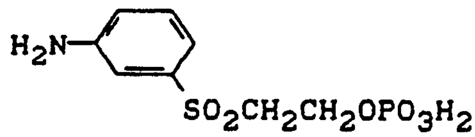

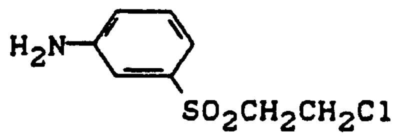

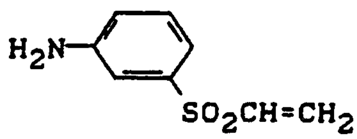

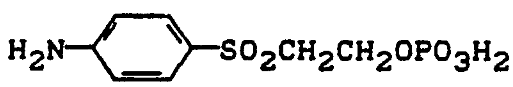

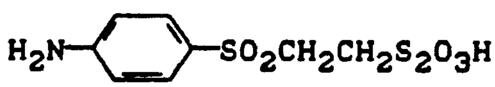

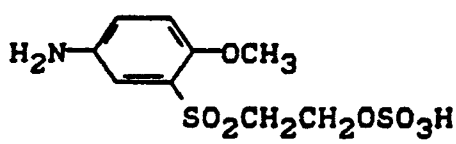

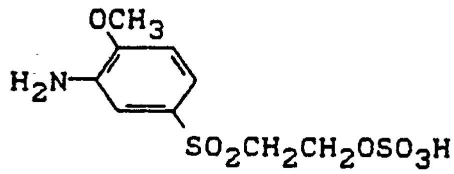

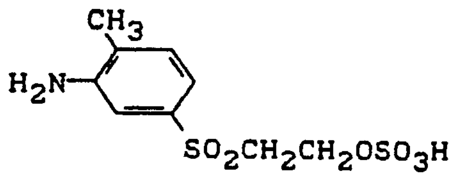

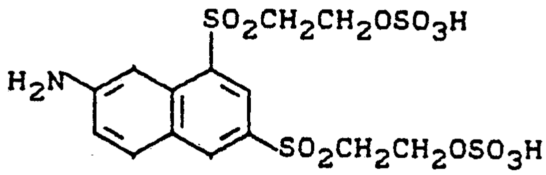

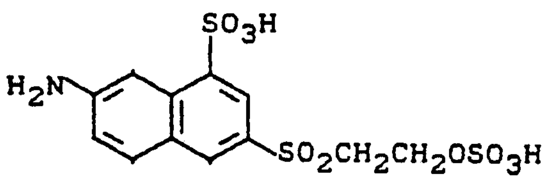

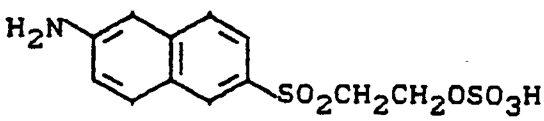

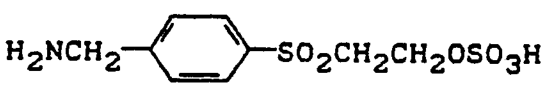

Amine der Formel (4) sind beispielsweise:
$NH_3CH_3NH_2$, $C_2H_5NH_2$, n-$C_3H_7NH_2$, i-$C_3H_7NH_2$, $H_2NCH_2CH_2OH$, $HN(CH_2CH_2OH)_2$, $N_2NCH_2CH_2OCH_3$, $H_2NCH_2COOH$, $H_2NCH_2CH_2SO_3H$.

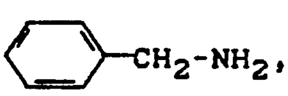 , 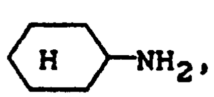 , 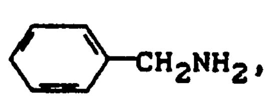 , 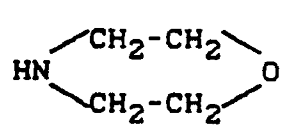

Geeignete faserreaktive Reste, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Sulfonium, Sulfonyl,
Azido-($N_3$), Rhodanido, Thio, Thiolether, Oxiether, Sulfinsäure und Sulfonsäure.

Im einzelnen sind beispielsweise zu nennen:

2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl, Hydroxy, Cyan, $C_1$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen oder Acylamino.

Im einzelnen seien folgende Reste genannt:

2-Amino-4-fluor-triazinyl-6, 2-Methylamino-4-fluortriazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-ß-Methoxy-ethylamino-4-fluor-triazinyl-6, 2-ß-Hydroxyethylamino-4-fluor-triazinyl-6, 2-Di-(ß-hydroxyethylamino)-4-fluor-triazinyl-6, 2-ß-Sulfoethylamino-4-fluor-triazinyl-6, 2-ß-Sulfoethyl-methylamino-4-fluor-triazinyl-6, 2-Carboxymethylamino-4-fluor-triazinyl-6, 2-Di-(carboxymethylamino)-4-6-fluor-triazinyl-6, 2-Sulfomethyl-methylamino-4-fluor-triazinyl-6, 2-ß-Cyanethylamino-4-fluor-triazinyl-6, 2-Benzylamino-4-fluor-triazinyl-6, 2-ß-Phenylethylamino-4-fluortriazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2′,5′-Disulfophenyl)-amino-4-fluor-triazinyl-6, 2-(o-, m-, p-Chlorphenyl)-amino-4-fluor-triazinyl-6, 2-(0-, m-, p-Methoxyphenyl)-4-fluor-triazinyl-6, 2-(2′-Methyl-4′-sulfophenyl)-amino-4-fluor-triazinyl-6, 2-(2′-Methyl-5′-sulfophenyl)-amino-4-fluor-triazinyl-6, 2-(2′-chlor-4′-sulfophenyl)-amino-4-fluor-triazinyl-6, 2-(2′-Chlor-5′-sulfophenyl)-amino-4-fluor-triazinyl-6, 2-(2′-Methoxy-4′-sulfophenyl)-amino-4-fluor-triazinyl-6, 2-(o-, m-, p-Carboxyphenyl)-amino-4-fluor-triazinyl-6, 2-(2′,4′-Disulfophenyl)-amino-4-fluor-triazinyl-6, 2-(3′,5′-Disulfophenyl)-amino-4-fluor-triazinyl-6, 2-(2′-Carboxy-4′-sulfophenyl)-amino-4-fluor-triazinyl-6, 2-(2′-Carboxy-5′-sulfophenyl)-amino-4-fluor-triazinyl-6, 2-(6′-Sulfonaphthyl-(2′))-amino-4-fluor-triazinyl-6, 2-(4′,8′-Disulfonaphthyl-(2′))-amino-4-fluor-triazinyl-6, 2-(6′,8′-Disulfonaphthyl-(2′))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-ß-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4′,6′,8′-Trisulfonaphthyl-(2′))-4-fluor-triazinyl-6, 2-(3′,6′,8′-Trisulfonaphthyl-(2′))-4-fluor-triazinyl-6, 2-(3′,6′-Disulfonaphthyl-(1′))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy)-4-fluor-triazinyl-6, 2-ß-Hydroxyethylmercapto-4-fluor-triazinyl-6, 2-Phenylmercapto-4-fluor-triazinyl-6, 2-(4′-Methylphenyl)-mercapto-4-fluortriazinyl, 2-(2′,4′-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Triazinyl-Reste und die entsprechenden durch Halogenaustausch mit tertiären Basen wie Trimethylamin, Triethylamin, Dimethyl-ß-hydroxyethylamin, Triethanolamin, N,N-Dimethylhydrazin, Pyridin oder Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder merheren Vinylsulfonyl- oder Sulfatoethylsulfonylreste verknüpft sein beispielsweise über ein Brückenglied

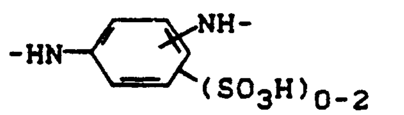

,

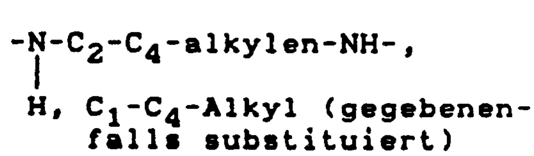

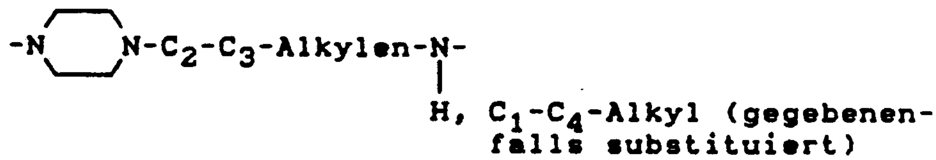

oder im Falle der Sulfatoethylsulfonyl- bzw. Vinylsulfonylgruppen über ein Brückenglied

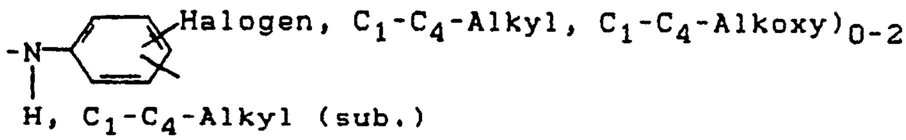

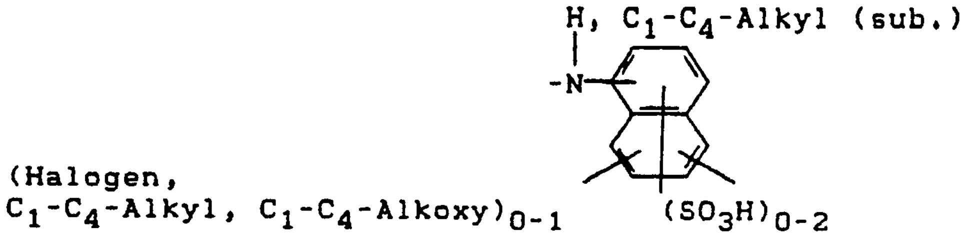

Beispiele für derartige Reste sind die folgenden:

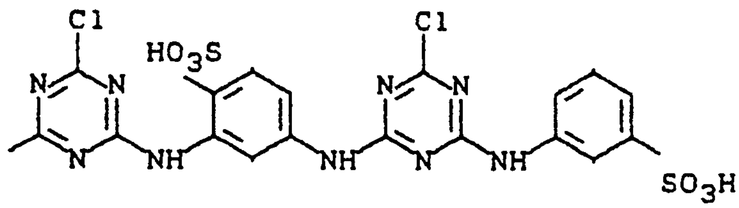

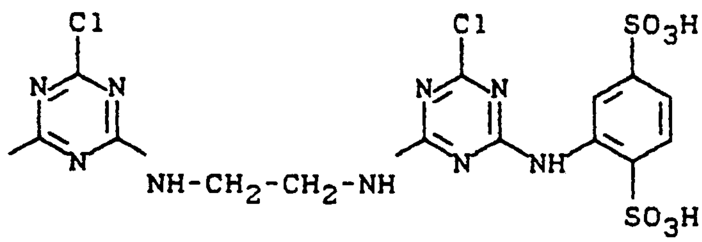

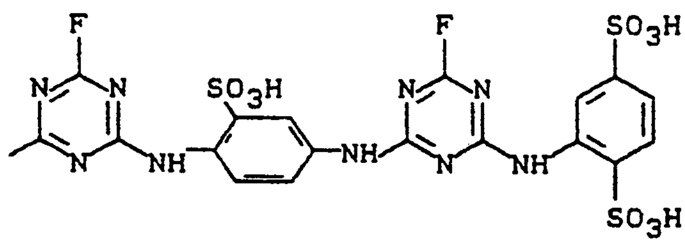

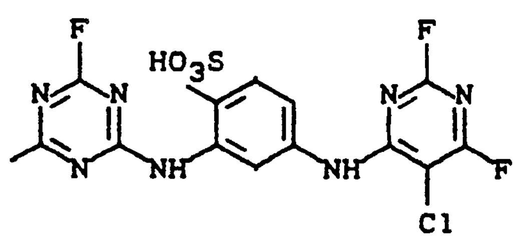

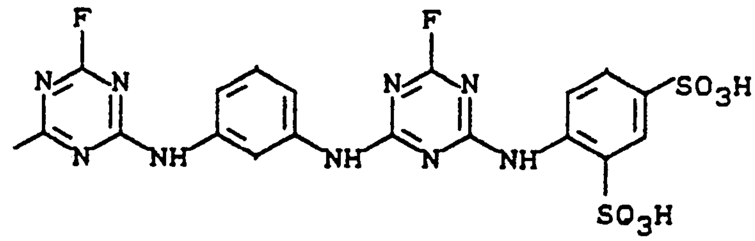

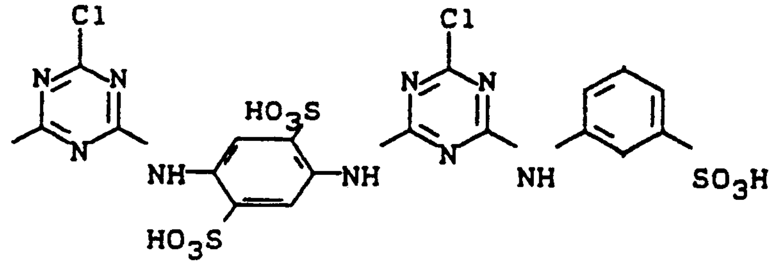

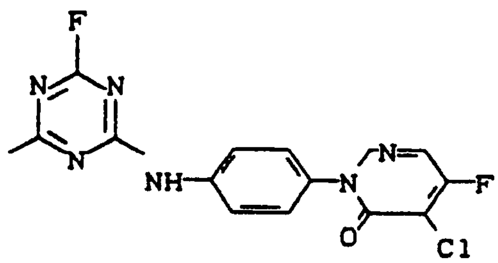

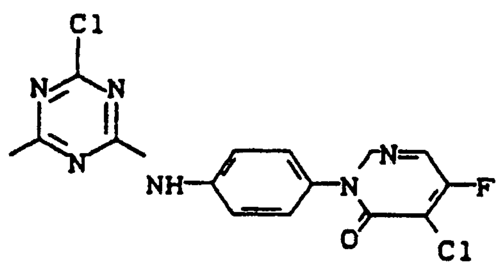

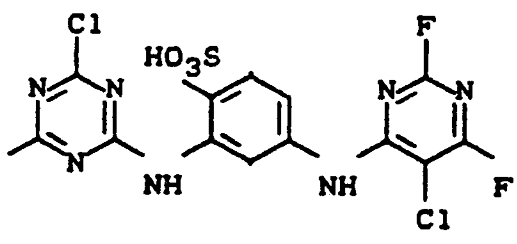

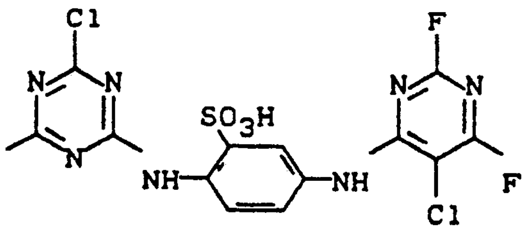

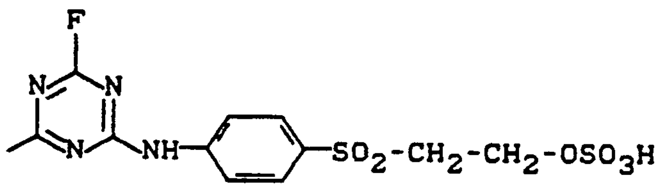

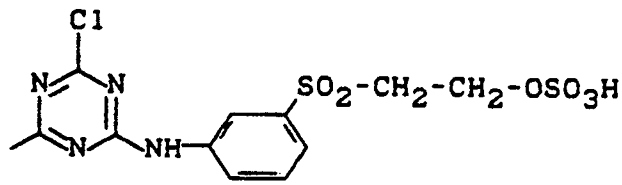

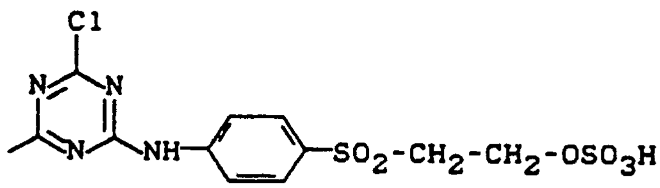

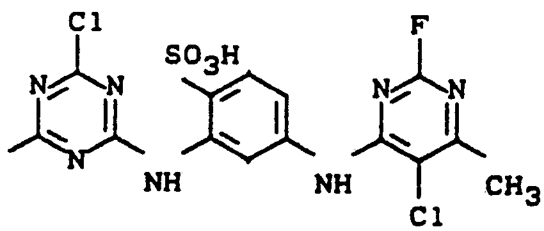

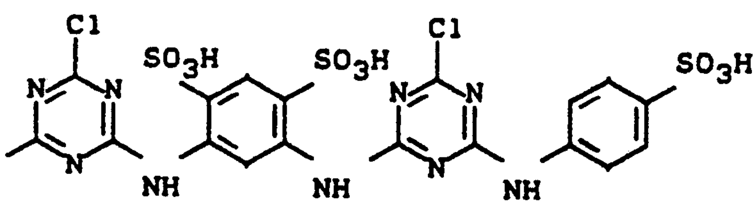

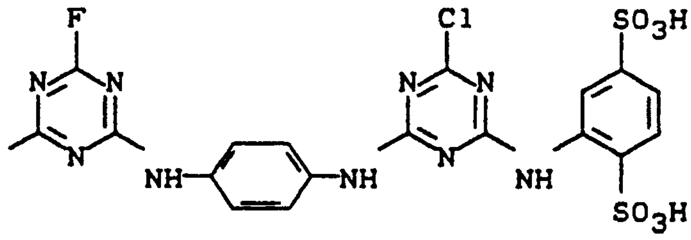

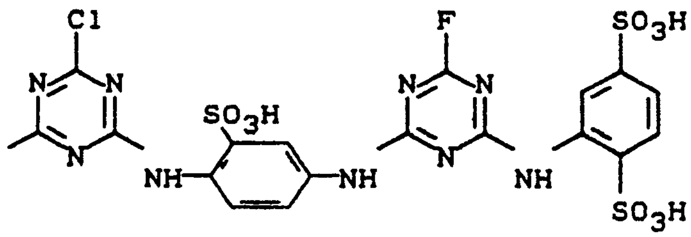

Weiter können die Halogentriazinylreste auch mit einem zur Bildung eines Vinylsulfonrestes befähigten Aminrest verknüpft sein, wie zum Beispiel 2-(2′-, 3′- oder 4′-(ß-Sulfatoethylsulfonyl)-phenylamino-4-fluor-triazinyl-6, 2-(2′-, 3′-, 4′-(ß-Thiosulfatoethylsulfonyl)-phenylamino)-4-fluor-triazinyl-6, 2-(2′-, 3′-, 4′-(ß-Phosphatoethyl-sulfonyl)-phenylamino)-4-fluor-triazinyl-6, 2-(2′-, 3′-, 4′-ß-Acetoxy-ethylsulfonyl)-phenylamino)-4-fluor-triazinyl-6, 2-(2′-, 3′-, 4′ -(ß-Chlorethylsulfonyl)-phenylamino)-4-fluor-triazinyl-6, 2-(2′-, 3′-, 4′-Vinylsulfonyl-phenylamino)-4-fluor-triazinyl-6, 2-(2-(ß-Sulfatoethylsulfonyl)-ethylamino)-4-fluor-triazinyl-6 sowie die entsprechenden 2-Substituierten-4-chlor-triazinyl-6-reste.

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5- sulfo- oder -5-mono-, -di- oder -trichlormethyl- oder 5-5-carboalkoxy-pyrimidinyl-6-, 2,6-Dichlorpyrimidin-4-carbonyl-, 2,4-Dichlorpyrimidin-5-carbonyl-, 2-Chlor-4-me thyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2-oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfanyl-, 1,4-Dichlorphthalazin-6-sulfonyl-oder -6-carbanyl-, 2,4-Dichlorchinazolin-7-oder -6-sulfonyl-oder -carbonyl-, 2- oder 3- oder 4-(4′,5′-Dichlorpyridazon-6′-yl-1′)-phenylsulfonyl- oder -carbonyl-, ß-(4′,5′-Dichlorpyridazon-6′-yl-1′)-ethylcarbonyl-, N-Methyl-N-(2,3-dichlorchinoxalin-6-sulfonyl)-aminoacetyl-, N-Methyl-N-(2,3-dichlarchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlar-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidi nyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimi dinyl-, 5-Chlor-2-chlormethyl-6-fluor-4-pyrimidinyl-, 5-Chlor-2-dichlormethyl-6-fluor-4-pyrimidinyl-, 5-Chlor2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl; 2-Methyl-4-fluor-5-methylsulfonylpyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3′-Carboxyphenyl)-sulfonyl-4-chlortriazinyl-6-, 2-(3′-Sulfophenyl)-sulfonyl-4-chlortriazinyl-6-, 2,4-Bis-(3′-carboxyphenylsulfonyl)-triazinyl-6; sulfonylgruppen haltige

Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5- chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl-oder -carbonyl-; 2-Chlorbenzthiazol-5- oder -6-carbonyl-oder -5- oder -6-sulfonyl-, 2-Arylsulfonyl-oder Alkylsulfonylbenzthiazol-5- oder -6-carbonyl- oder -5- oder -6-sulfonyl-, wie 2-Methylsulfonyl- oder 2-Ethylsulfonylbenzthiazol-5-oder -6-sulfonyl- oder -carbonyl-, 2-Phenyosulfonylbenzthiazol-5-oder -6-sulfonyl-oder -carbanyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5-oder -6-carbonyl- oder -sulfonyl-, 2-Chlorbenzimidazol-5-oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl-oder -4- oder -5-sulfonyl-, N-Oxid des 4-Chlor- oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, ß-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1-oder -sulfonyl-1-, ß-(2,2,3,3-Tetrafluorcyclobutyl-2)- aryloxy-, α- oder ß-Bromacryloyl-, α- oder ß-Alkyl- oder Arylsulfoacryloyl-Gruppe, wie α- oder ß-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$,

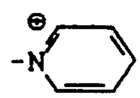 $X^{\ominus}$ oder 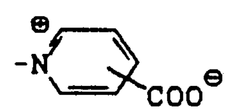 mit

X = Anion, bspw. $-OSO_3H$, $-OPO_3H_2$, -Cl, -Br, -F, -SCN, -OCN, $-OSO_3CH_3$, $-OSO_2C_6H_5$, $OOC-CH_3$.

Die Isolierung der nach den vorstehend beschriebenen Verfahren erhaltenen Farbstoffe erfolgt in üblicher Weise durch Aussalzen, beispielsweise mit Natrium- oder Kaliumchlorid und/oder durch Ansäuern mit einer Mineralsäure oder durch Eindampfen der neutralen oder schwach sauren wäßrigen Farbstofflösung, vorzugsweise bei mäßig erhöhter Temperatur und vermindertem Druck oder durch Sprühtrocknung.

Die neuen Farbstoffe geben auf Cellulose- sowie natürlichen oder synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Alkalisalze, insbesondere der Lithium-, Natrium- oder Kaliumsalze.

Die in den Beispielen angegebenen Farbkennzahlen beziehen sich auf Colour Index Hue Indication

Chart (Indicator Numbers).

Beispiel 1

57,5 g (0,1 oal) Cu-Tetrabenzotriazaporphin (hergestellt nach dem Beispiel 1 der US-Patentschrift 2166240) werden in einer Stunde in 155 ml Chlorsulfonsäure eingetragen. Anschließend bringt man in einer weiteren Stunde die Temperatur auf 145° C und rührt dann vier Stunden im Temperaturbereich von 143 bis 145° C. Die dunkelgrüne Schmelze wird auf 80° C abgekühlt und dann in einer Stunde tropfenweise mit 24 ml (0,33 mol) Thionylchlorid versetzt. Man rührt dann eine weitere Stunde bei 75 bis 80° C nach und kühlt auf Raumtemperatur ab. Die dickflüssige dunkelgrüne Schmelze wird auf Eiswasser ausgetragen, abgesaugt und auf der Nutsche mit wenig Wasser ausgewaschen. Die als wasserfeuchte Paste vorliegende Verbindung entspricht folgender Zusammensetzung:

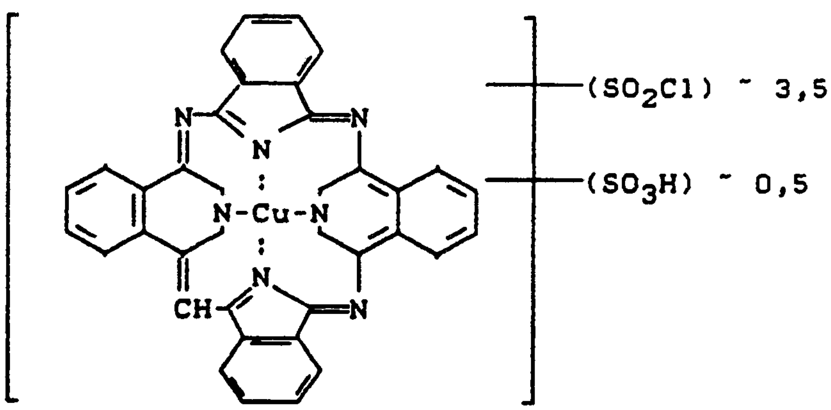

Beispiel 2

112 g ß-Sulfatoethyl-(4-amino-phenyl)-sulfon werden in 200 ml Wasser unter Zugabe von Natriumhydrogencarbonat bei einem pH von 6,5 gelöst. Unter gutem Rühren wird die nach Beispiel 1 erhaltene Cu-Tetrabenzotriazaporphinsulfochloridsulfonsäure in Form des feuchten Preßkuchens eingetragen. Dann fügt man 5 g Pyridin (oder die äquivalente Menge Nicotinsäure, Nicotinsäureamid oder Pyridin-3-sulfonsäure) hinzu. Man hält bei einer Temperatur von 20 bis 25° C den pH bei 6 bis 6,5 durch Zugabe von Natriumhydrogencarbonat. Die Reaktion ist beendet, wenn kein Bicarbonat mehr verbraucht wird. Man erhält eine klare dunkelgrüne Lösung.

Die Isolierung des gebildeten Farbstoffs erfolgt durch Eindampfen dieser Lösung oder durch Aussalzen. Man erhält einen salzhaltigen grünen Farbstoff, dessen Konstitution nach der Analyse etwa der Formel

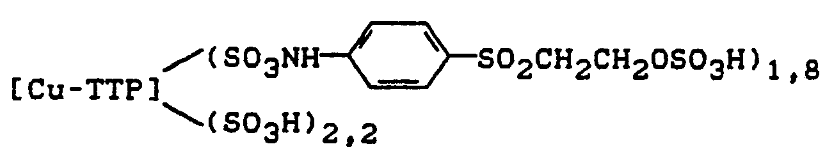

entspricht. Der Farbstoff färbt Baumwolle nach einem der für Reaktivfarbstoffe der Vinylsulfonreihe üblichen Färbeverfahren in klaren grünen Tönen.

Farbkennzahl 18

Beispiel 3

42,1 g ß-Sulfatoethyl-(3-amino-phenyl)-sulfon und 6,1 g Nicotinsäureamid werden in 750 ml Wasser unter Zugabe von Natriumbicarbonat bei einem pH von 6,5 bei Raumtemperatur gelöst. Unter gutem Rühren wird der nach Beispiel 1 erhaltene wasserfeuchte Filterkuchen eingetragen. Die Reaktion setzt

langsam ein und der pH des Reaktoinsgmisches wird durch Einstreuen von Natriumbicarbonat bei 6 bis 6,5 und die Temperatur bei 20 bis 25°C gehalten. Nach etwa 24 Stunden ist die Reaktion zuende. Die entstandene klare dunkelgrüne Lösung wird geklärt und dann unter vermindertem Druck bei 60°C zur Trockne eingedampft. Man erhält einen salzhaltigen grünen Farbstoff, dessen Konstitution etwa der Formel

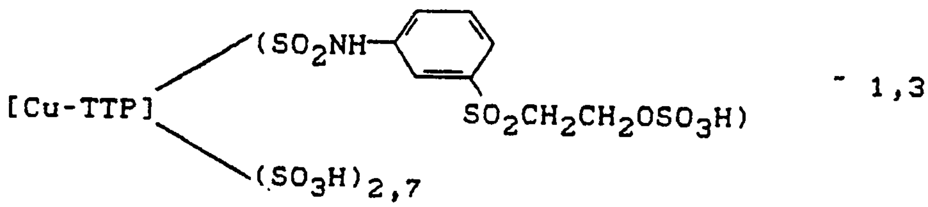

entspricht.

Der Farbstoff färbt Baumwolle nach einem der für Reaktivfarbstoffe der Vinylsulfonreihe üblichen Färbeverfahren in klaren grünen Tönen.
Farbkennzahl 18

Beispiel 4

42,1 g ß-sulfatoethyl-(4-aminophenyl)-sulfon und 6,1 g Nicotinsäureamid werden in 200 ml Wasser unter Zugabe von Natronhydrogencarbonat bei einem pH von 6 bis 6,5 bei Raumtemperatur gelöst. Anschließend fügt man 10 g Ammoniumchlorid hinzu und trägt dann unter gutem Rühren den nach Beispiel 1 erhaltenen wasserfeuchten Filterkuchen ein. Der pH des Reaktionsgmisches wird dann fortlaufend durch Einstreuen von Natriumhydrogencarbonat bei 6,5 bis 7 und die Temperatur bei 20 bis 25°C gehalten. Die Kondensation ist beendet, wenn kein Bicarbonat mehr verbraucht wird.

Es resultiert eine klare dunkelgrüne Lösung. Der Farbstoff wird durch Aussalzen isoliert Man erhält einen grünen Farbstoff, dessen Konstitution etwa der Formel

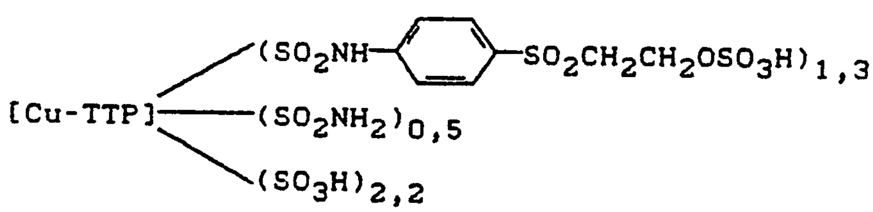

entspricht.

Beispiel 5

Der nach Beispiel 1 erhaltene wasserfeuchte Filterkuchen wird in 200 ml Wasser angerührt und mit verdünnter Na tronlauge neutral gestellt. Dann läßt man 12,8 g 20%iges wäßriges Ammoniak langsam eintropfen und verrührt diese Mischung bei 20°C, bis sie wieder neutral reagiert. Dann fügt man eine neutral gestellte Lösung von 56,2 g ß-Sulfatoethyl-(4-aminophenyl)-sulfon und von 12,3 g Nicotinsäure in 150 ml Wasser hinzu. Danach rührt man bei 20°C weiter, wobei durch Einstreuen von Natriumhydrogencarbonat ein pH von 6 bis 6,5 eingehalten wird. Nach Beendigung der Kondensation filtriert man die dunkelgrüne Lösung und isoliert den Farbstoff durch Aussalzen. Man erhält einen salzhaltigen grünen Farbstoff, dessen Konstitution etwa der Formel entspricht:

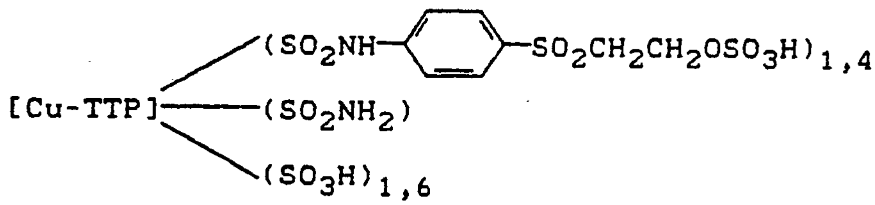

Er färbt Baumwolle nach einem der für Reaktivfarbstoffe der Vinylsulfonreihe üblichen Färbeverfahren in klaren grünen Tönen.
Farbkennzahl 18

Beispiel 5a

Arbeitet man in der in Beispiel 5a beschriebenen Weise, verwendet jedoch anstelle von Ammoniak eine äquivalente Menge der nachfolgend genannten Amine, so erhält man gleichfalls Farbstoffe, die Baumwolle in klaren grünen Tönen färben: Methylamin, Dimethylamin, Ethylamin, Diethylamin, Ethanolamin, Diethanolamin, Aminoessigsäure, Methalyminoessigsäure, Taurin, N-Methyltaurin, Anilin, N-Methylanilin, N-Ethylanilin, n-Sulfanilsäure, Morpholin, Piperidin.

Beispiel 6

57,5 g (0,1 mol) Cu-Tetrabenzotriazaporphin werden in einer Stunde in 155 ml Chlorsulfonsäure eingetragen. Anschließend bringt man in einer weiteren Stunde die Temperatur auf 127 bis 135° C und rührt dann eine Stunde in diesem Temperaturbereich. Die dunkelgrüne Schmelze kühlt man anschließend auf 80° C ab und tropft dann in einer Stunde 23 ml (0,3 mol) Thionylchlorid ein. Es wird dann eine weitere Stunde bei 75 bis 80° C gerührt. Die auf Raumtemperatur abgekühlte dickflüssige dunkelgrüne Schmelze wird auf Eis ausgetragen, abgesaugt und auf der Nutsche mit wenig Wasser ausgewaschen. Die als wasserfeuchte Paste vorliegende Verbindung entspricht folgender Zusammensetzung:

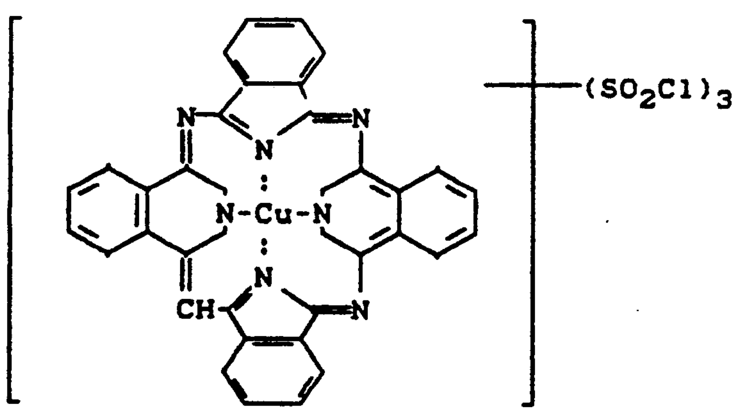

Beispiel 7

84,3 g (0,3 mol) ß-Sulfatoethyl-(4-amino-phenyl)-sulfon werden in 100 ml Wasser neutral gelöst. In diese Lösung trägt man den nach Beispiel 6 erhaltenen wasserfeuchten Filterkuchen ein, fügt 5 g Pyridin hinzu und führt die Kondensation bei 10 bis 13° C durch, wobei durch Zugabe von Natriumbicarbonat ein pH von 5,5 bis 6 eingehalten wird. Solltee während der Kondensation der Ansatz eine breiige Konsistenz annehmen, so kann mit etwas Wasser verdünnt werden. Man rührt solange, bis der pH konstant bleibt. Dann erwärmt man 2 Stunden auf 40° C. Anschließend wird ein kleiner, genau abgemessener Teil der Farbstofflösung entnommen und davon der Diazotierwert bestimmt, woraus sich der Kondensationsgrad

(vgl. allgemeine Formel 1b) durch Differenzbildung zur insgesamt eingesetzten Menge an ß-Sulfatoethyl-(4-aminophenyl)-sulfon errechnet. Dann wird die klare dunkelgrüne Lösung filtriert und der Farbstoff ausgesalzen und getrocknet. Man erhält einen grünen Farbstoff, dessen Konstitution nach obiger Bestimmung etwa der Formel

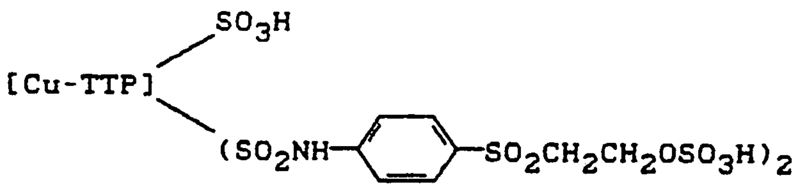

entspricht. Er färbt Baumwolle nach einem der für Reaktivfarbstoffe der Vinylsulfonreihe üblichen Färbeverfahren in klaren grünen Tönen.
Farbkennzahl 18

Beispiel 8

Der nach Beispiel 1 erhaltene wasserfeuchte Filterkuchen wird in 200 ml Wasser angerührt und mit verdünnter Natronlauge neutral gestellt. Anschließend fügt man 0,13 mol 2,6-Difluor-5-chlor-4-(3′-aminophenylamino)-pyridin (erhältlich aus m-Phenylendiamin durch Acylierung mit 2,4,6-Trifluor-5-chlor-pyrimidin) hinzu und erwärmt auf 40 bis 45° C, wobei man durch Einstreuen von Natriumhydrogencarbonat einen pH von 6 bis 6,5 erhält. Wenn kein Bicarbonat mehr verbraucht wird, erwärmt man auf 60° C und fügt soviel Wasser hinzu, bis eine blaue Lösung entsteht, die dann geklärt wird. Im Rückstand wird das nicht umgesetzte Kondensationsprodukt durch den Diazotierwert bestimmt. Durch Differenzbildung zur insgesamt eingesetzten Menge an 2,6-Difluor-5-chlor-4-(3′-aminophenylamino)-pyrimidin errechnet sich der Kondensationsgrad c (vgl. allgemein Formel 1a). Aus dem Filtrat wird der Farbstoff durch Zugabe von Natriumchlorid ausgesalzen. Man erhält einen grünen Farbstoff, dessen Struktur nach den obigen Bestimmungen etwa der Formel

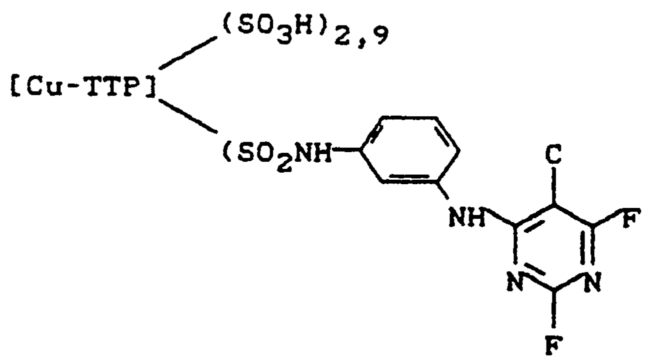

1,1

entspricht.

Er färbt Baumwolle nach einem der für Reaktivfarbstoffe üblichen Verfahren in einem klaren Grün.
Farbkennzahl 18.

Weitere wertvolle Reaktivfarbstoffe, die Baumwolle grün färben, erhält man, wenn man anstelle von 2,6-Difluor-5-chlor-4-(3′-aminophenylamino)-pyrimidin eine äquivalente Menge der in der Tabelle 1 aufgeführten Amine verwendet und ansonsten wie angegeben verfährt.

Tabelle 1

| Beispiel | | R |
| --- | --- | --- |
| 8 - 1 | 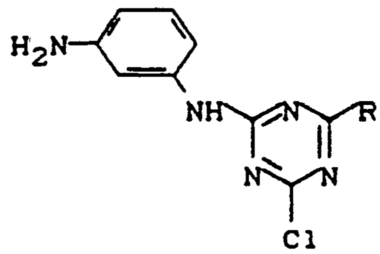 | $NH_2$ |
| 8 - 2 | " | $NHCH_3$ |
| 8 - 3 | " | $NHCH_2CH_2OCH_3$ |
| 8 - 4 | " | $OCH_2CH_2OCH_3$ |
| 8 - 4 | " | 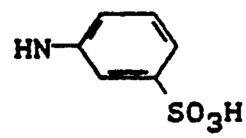 |

8 - 5

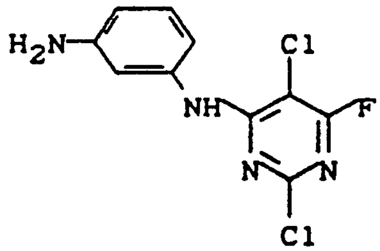

8 - 6

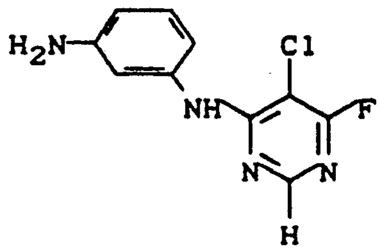

8 - 7

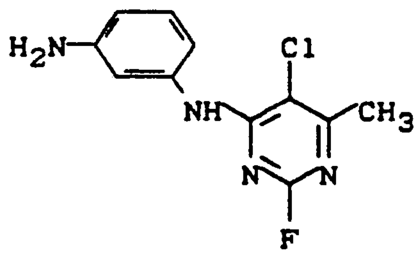

8 - 8

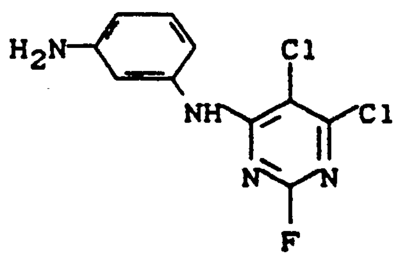

8 - 9

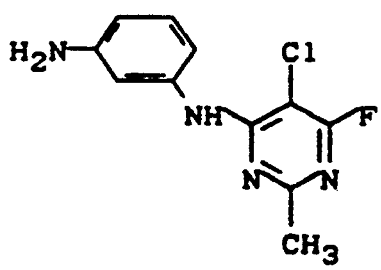

8 - 10

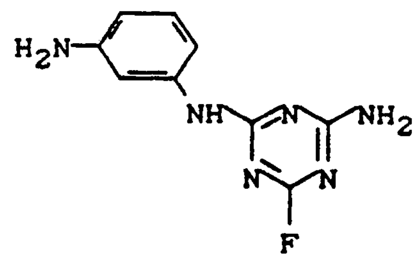

8 - 11

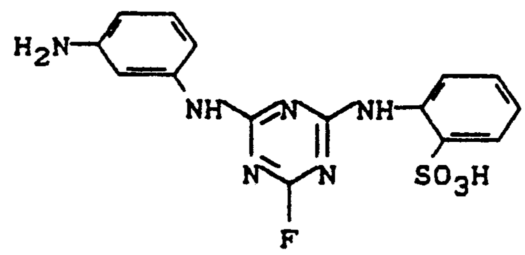

8 - 12

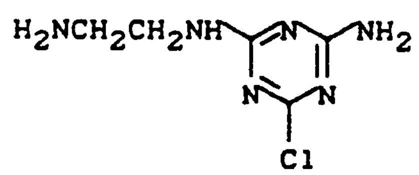

Beispiel 9

Der nach Beispiel 1 erhaltene wasserfeuchte Filterkuchen wird in 200 ml Wasser angerührt und mit verdünnter Natronlauge neutral gestellt. Dann läßt man 12,8 g 20%iges wäßriges Ammoniak langsam eintropfen und verrührt diese Mischung bei Raumtemperatur, bis sie wieder neutral reagiert. Dann fügt man 0,13 mol 2,6-Difluor-5-chlor-4-(3′-aminophenylamino)-pyrimidin hinzu und erwärmt auf 40 bis 45° C, wobei man durch Einstreuen von Natriumbicarbonat einen pH von 6 bis 6,5 erhält.

Wenn kein Bicarbonat mehr verbraucht wird, erwärmt man auf 60° C und fügt soviel Wasser hinzu, bis eine klare Lösung entsteht, die dann geklärt wird. Im Rückstand wird das nicht umgesetzte Kondensationsprodukt durch den Diazotiertwert bestimmt. Durch Differenzbildung zur insgesamt eingesetzten Menge an 2,6-Difluor-5-chlor-4-(3′-aminophenylamino)-pyrimidin errechnet sich der Kondensationsgrad c (vgl. allgemeine Formel 1a). Aus dem Filtrat wird der Farbstoff durch Zugabe von Natriumchlorid ausgesalzen. Man erhält einen grünen Farbstoff, dessen Struktur nach der obigen Bestimmung und Analyse etwa der Formel

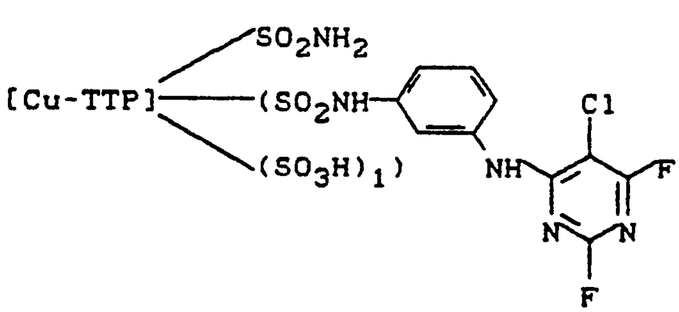

entspricht.
Er färbt Baumwolle nach einem der für Reaktivfarbstoffe üblichen Verfahren in einem klaren Grün.
Farbkennzahl 18.

Weitere grüne Baumwollreaktivfarbstoffe erhält man, wenn man anstelle von 2,6-Difluor-5-chlor-4-(3′-aminophenylamino)-pyrimidin die in Tabelle 1 aufgeführten Amine verwendet und ansonsten wie angegeben

verfährt.

Gleichfalls grüne Reaktivfarbstoffe werden erhalten, wenn man anstelle von Ammoniak eine äquimolare Menge der in Beispiel 5a aufgeführten Amine und das in Beispiel 8 verwendete und die in der Tabelle 1 genannten reaktivgruppenhaltigen Amine einsetzt und nach den Angaben von Beispiel 9 verfährt

Beispiel 10

Der nach Beispiel 1 erhaltene wasserfeuchte Filterkuchen wird in 200 ml Wasser angerührt und mit verdünnter Natronlauge neutral gestellt. Dann läßt man 12,8 g 20%igen wäßrigen Ammoniak eintropfen und verrührt diese Mischung bei Raumtemperatur, bis sie wieder neutral reagiert. Darin fügt man 0,13 mol 3-Oxalylaminoanilin hinzu und erwärmt auf 40 bis 45 °C, wobei man durch Eintropfen von verdünnter Natronlauge einen pH von 6 bis 6,5 erhält und soviel Wasser zugibt, daß eine klare Lösung entsteht. Wenn keine Natronlauge mehr verbraucht wird, fügt man soviel konzentrierte Natronlauge hinzu, daß ein ca. 2n-Natronlauge entsteht, und spaltet die Oxylylgruppe durch Erwärmen auf 80 bis 90 °C ab. Die Lösung wird mit Salzsäure neutral gestellt und der Farbstoff durch Zugabe von Natriumchlorid abgeschieden. Der Farbstoff, der als wasserfeuchte Paste vorliegt, entspricht etwa der Formel

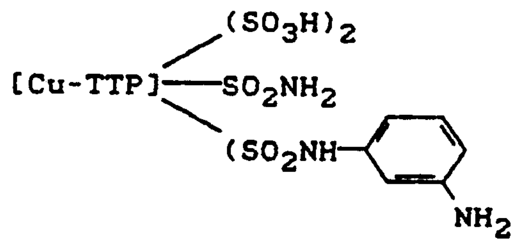

Die Paste wird in Eiswasser gelöst. Man tropft dann 16,5 g 2,4,6-Trifluor-5-chlor-pyrimidin ein und hält dabei den pH durch Eintropfen von verdünnter Natronlauge bei pH 6 bis 7. Nach beendeter Kondensation wird der Farbstoff ausgesalzen und getrocknet. Man erhält einen grünen Farbstoff, dessen Konstitution dem nach Beispiel 9 erhaltenen Farbstoff entspricht.

Weitere wertvolle grüne Baumwollreaktivfarbstoffe werden erhalten, wenn man nach den Angaben von Beispiel 10 verfährt und anstelle von 2,4,6-Trifluor-5-chlor-pyrimidin eine äquimolare Menge der in Tabelle 2 aufgeführten Reaktivkomponenten verwendet und die Reaktionstemperatur so wählt, wie sie der Reaktivität der Reaktivkomponenten entspricht.

**Tabelle 2**

**Beispiele**

10 - 1

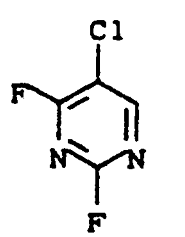

10 - 2

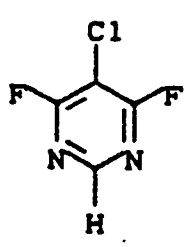

10 - 3

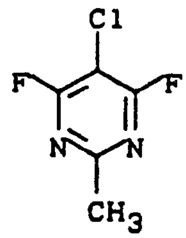

10 - 4

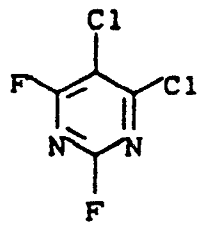

10 - 5

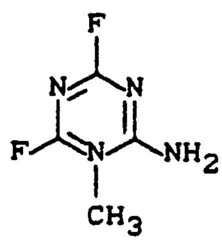

10 - 6

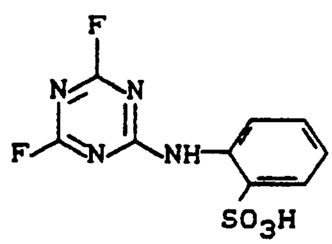

10 - 7

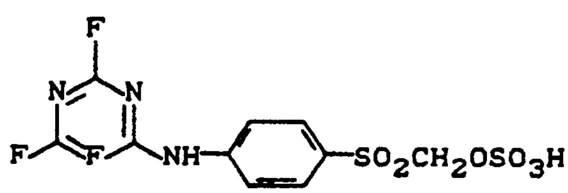

10 - 8

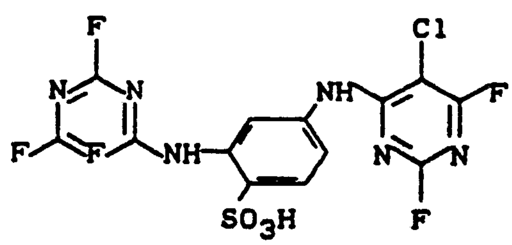

10 - 9

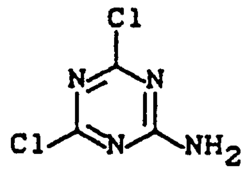

10 - 10

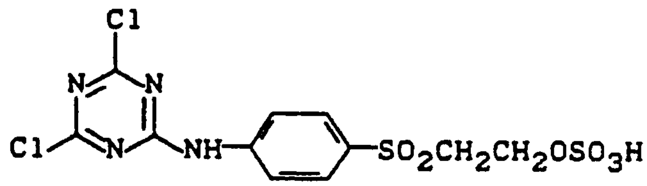

10 - 11

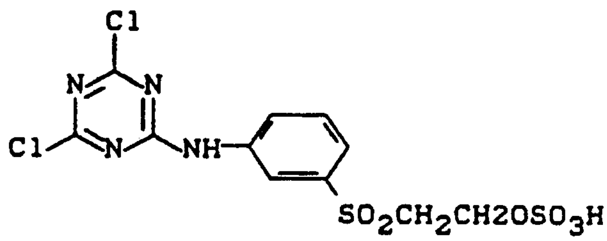

Beispiel 11

Wenn man nach den Angaben von Beispiel 10 verfährt, jedoch die Vorbehandlung mit wäßriger Ammoniaklösung unterläßt, so erhält man ein Farbstoffamin mit etwa folgender Struktur:

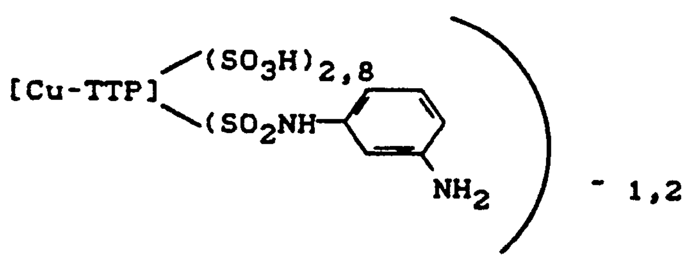

Durch Acylierung mit der in Beispiel 10 verwendeten und der in Tabelle 2 aufgeführten Reaktivkomponenten erhält man gleichfalls grüne Baumwollreaktivfarbstoffe.

**Ansprüche**

1. Reaktivfarbstoffe, die in Form der freien Säure der Formel (1)

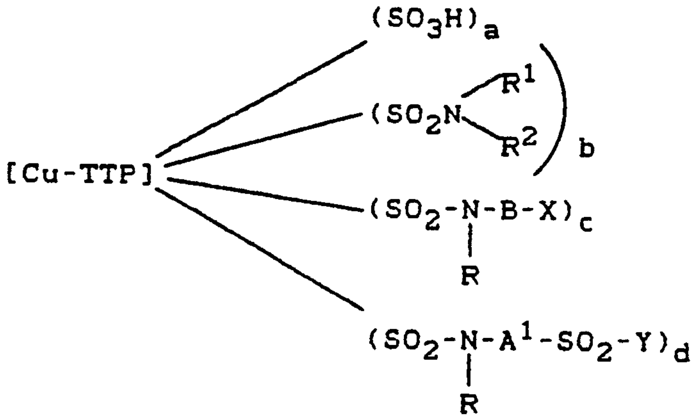

(1)

entsprechen, worin
[Cu-TTP] = Rest des Kupfer-Tetrabenzotriazaporphins der Formel

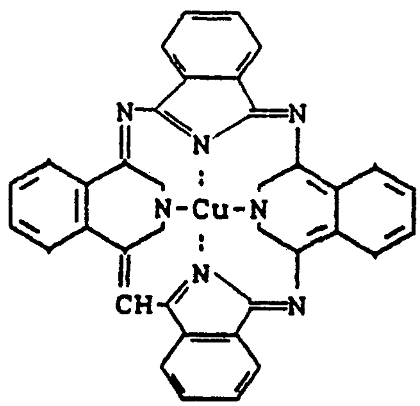

$R^1$ und $R^2$ gleich oder verschieden sein können und für Wasserstoff oder ggf. substituiertes $C_1$-$C_6$-Alkyl stehen oder worin $R^1$ und $R^2$ zusammen mit dem durch sie eingeschlossenen Stickstoffatom einen ggf. weitere Heteroatome enthaltenden heterocyclischen Rest bilden,
B = direkte Bindung oder -A-$\underset{R}{N}$-,
wobei
A = zweiwertiger aliphatischer, araliphatischer oder aromatischer Rest,
R = Wasserstoff, ggf. substituiertes $C_1$-$C_6$-Alkyl, wobei die Gruppierung
-$\underset{R}{N}$-A-$\underset{R}{N}$-
auch für

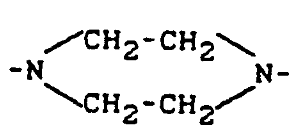 stehen kann,

$A^1$ = zweiwertiger aliphatischer, araliphatischer oder aromatischer Rest,
X = Reaktivgruppe,
Y = $-CH=CH_2$ oder $-CH_2-CH_2-Z$, wobei Z eine abspaltbare Gruppe bedeutet,
a = 0 bis 3,
b = 0 bis 1,
c = 0 bis 3,
d = 0 bis 3,
wobei a + b + c + d = 3 bis 4

und c + d = 1 bis 3.

2. Farbstoffe des Anspruches 1 mit
a = 0 bis 3,
b = 0 bis 1,
c = 1 bis 3 und
d = 0,
wobei a + b + c = 3 bis 4.

3. Farbstoffe des Anspruches 1 mit
a = 0 bis 3,
b = 0 bis 1,
c = 0,
d = 1 bis 3,
wobei a + b + d = 3 bis 4.

4. Farbstoffe des Anspruches 1 mit
a = 0 bis 2,
b = 0 bis 1,
c = 0,2 bis 2,
d = 0,2 bis 2,
wobei a + b + c + d = 3 bis 4
und c + d = 1 bis 3, insbesondere 1,5 bis 2,5.

5. Farbstoffe des Anspruchs 2 mit
B = -A- N -,
|
R
und
X = Reaktivgruppe der Monofluortriazin-, Monochlortriazin- oder Fluorpyrimidin-Reihe.

6. Farbstoffe des Anspruches 2 mit
B = direkte Bindung und
X = über $-SO_2-$ verknüpfte heterocyclische Reaktivgruppe.

7. Farbstoffe des Anspruchs 3 mit

$A^1$ = 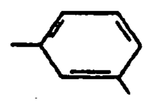 oder 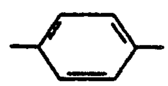

Y = $-CH_2CH_2OSO_3H$ oder $-CH=CH_2$.

8. Kupfer-Tetrabenzo-triazaporphin-sulfochloride der Formel

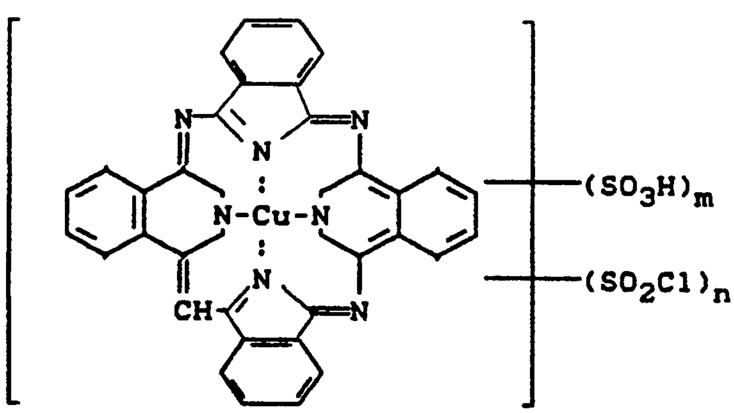

worin m = 0 bis 3, n = 1 bis 4 und m + n = < 4.

Europäisches Patentamt

## EUROPÄISCHER RECHERCHENBERICHT

Nummer der Anmeldung

EP 90100559.5

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
| D,A | US - A - 2 166 240 (DENT) * Seite 1, rechte Spalte, Zeilen 10-30 * -- | 1 | C 09 B 62/016<br>C 09 B 47/00 |
| A | DE - A1 - 3 503 747 (BAYER AG) * Patentansprüche 1,2 * -- | 1-5,7 | |
| D,A | JOURNAL OF THE CHEMICAL SOCIETY, Part I, 1938, London DENT: "Preparation of Phthalo--cyanine-like Pigments related to the Porphyrius" * Seiten 1-6, insbesondere Seite 5, Zeilen 22-29 * ---- | 8 | |
| | | | RECHERCHIERTE SACHGEBIETE (Int Cl 5) |
| | | | C 09 B |

Der vorliegende Recherchenbericht wurde für alle Patentansprüche erstellt.

| Recherchenort | Abschlußdatum der Recherche | Prüfer |
|---|---|---|
| WIEN | 24-04-1990 | HAUSWIRTH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument